(19) Europäisches Patentamt
European Patent Office
Office européen des brevets

(11) **EP 2 994 910 B1**

(12) **EUROPEAN PATENT SPECIFICATION**

(45) Date of publication and mention
of the grant of the patent:
**14.06.2017 Bulletin 2017/24**

(51) Int Cl.:
*G10L 15/22* (2006.01)       *G10L 15/14* (2006.01)
*G06F 3/16* (2006.01)        *G10L 15/08* (2006.01)

(21) Application number: **14726846.0**

(22) Date of filing: **24.04.2014**

(86) International application number:
**PCT/US2014/035247**

(87) International publication number:
**WO 2014/182460 (13.11.2014 Gazette 2014/46)**

(54) **METHOD AND APPARATUS FOR DETECTING A TARGET KEYWORD**

VERFAHREN UND VORRICHTUNG ZUM NACHWEIS VON SCHLÜSSELWÖRTERN

PROCÉDÉ ET APPAREIL DE DÉTECTION DE MOT-CLÉ CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2013 US 201361820498 P**
**26.07.2013 US 201361859058 P**
**22.11.2013 US 201314087939**

(43) Date of publication of application:
**16.03.2016 Bulletin 2016/11**

(73) Proprietor: **Qualcomm Incorporated**
**San Diego, CA 92121-1714 (US)**

(72) Inventors:
• **KIM, Sungwoong**
**San Diego, CA 92121-1714 (US)**
• **LEE, Minsub**
**San Diego, CA 92121-1714 (US)**
• **KIM, Taesu**
**San Diego, CA 92121-1714 (US)**
• **JIN, Minho**
**San Diego, CA 92121-1714 (US)**
• **HWANG, Kyu Woong**
**San Diego, CA 92121-1714 (US)**

(74) Representative: **Bentall, Mark James**
**Reddie & Grose LLP**
**16 Theobalds Road**
**London WC1X 8PL (GB)**

(56) References cited:
**EP-A2- 1 168 302     US-A1- 2013 110 521**

• **Bhiksha Raj, Rita Singh, Mosur Ravishankar: "Design and Implementation of Speech Recognition Systems (Lecture Notes)", , 25 April 2011 (2011-04-25), XP002727150, Retrieved from the Internet: URL:http://asr.cs.cmu.edu/spring2011/ [retrieved on 2014-07-14]**
• **CHIGIER B ED - INSTITUTE OF ELECTRICAL AND ELECTRONICS ENGINEERS: "Rejection and keyword spotting algorithms for a directory assistance city name recognition application", SPEECH PROCESSING 1. SAN FRANCISCO, MAR. 23 - 26, 1992; [PROCEEDINGS OF THE INTERNATIONAL CONFERENCE ON ACOUSTICS, SPEECH AND SIGNAL PROCESSING (ICASSP)], NEW YORK, IEEE, US, vol. 2, 23 March 1992 (1992-03-23), pages 93-96, XP010058852, DOI: 10.1109/ICASSP.1992.226112 ISBN: 978-0-7803-0532-8**
• **WILPON J G ET AL: "AUTOMATIC RECOGNITION OF KEYWORDS IN UNCONSTRAINED SPEECH USING HIDDEN MARKOV MODELS", IEEE TRANSACTIONS ON ACOUSTICS, SPEECH AND SIGNAL PROCESSING, IEEE INC. NEW YORK, USA, vol. 38, no. 11, 1 November 1990 (1990-11-01), pages 1870-1878, XP000171007, ISSN: 0096-3518, DOI: 10.1109/29.103088**

Description

## CROSS-REFERENCE TO RELATED APPLICATIONS

The present application claims priority from commonly owned U.S. Provisional Patent Application No. 61/820,498 filed on May 7, 2013 U.S. Provisional Patent Application No. 61/859,058 filed on July 26, 2013, and U.S. Non-Provisional Patent Application No. 14/087,939 filed on November 22, 2013.

## TECHNICAL FIELD

The present disclosure relates generally to audio processing, and more specifically, to detecting a target keyword from an audio input in an electronic device.

## BACKGROUND

In recent years, the use of electronic devices having sound capturing capabilities such as smartphones, tablet computers, and smart TVs has been increasing steadily. Such electronic devices may allow one or more applications or functions to be activated in response to a voice keyword. Since users of such devices typically use such voice activation features in a random time frame, these devices often operate in an active state continuously to enable such input sound to be captured and processed.

Operating such devices in an active state continuously generally allows receiving an entire keyword in detecting the keyword from an input sound. However, using such devices to continuously capture and process the input sound for detecting a keyword typically leads to increased power consumption or a reduced battery life in the case of mobile devices. Some devices have implemented a duty cycle to reduce the time when an input sound stream is received and processed. However, if the beginning of the keyword from a user falls in an inactive state of the duty cycle, it may result in a failure to detect a keyword, requiring the user to repeat the keyword.

In addition, when different users speak a same keyword to activate a function in an electronic device, they typically speak the keyword at different speeds such that different time periods may be devoted to each of the portions of the keyword. To address the differences according to users, some electronic devices have processed all combinations of all possible time periods for detecting the keyword. However, such a sound processing method generally increases computational complexity and requires significantly large computing resources. Prior art document "Design and Implementation of Speech Recognition Systems (Lecture Notes)" by Bhiksha Raj, Rita Singh, Mosur Ravishankar discloses on slide 40 an example where a target keyphrase to be matched consists at least of an initial portion and a subsequent portion. Epsilon transitions are used in the decoding grammar in order to allow for skipping portions of a keyphrase (including the initial portion of the keyphrase). A state network with a single starting state is used, where all subsequent states are reachable from the start state via a sequence of Epsilon transitions (and hence are entry states).

## SUMMARY

The present disclosure provides methods and apparatus for detecting a target keyword to activate a function or an application.

According to one aspect of the present disclosure, a method for detecting a target keyword, which includes an initial portion and a plurality of subsequent portions is disclosed. The method generates, at an electronic device, an input sound stream based on an input sound that starts from one of the plurality of subsequent portions of the target keyword, the input sound stream generated during time periods according to a duty cycle. The method determines sound features associated with the input sound based on the input sound stream, and obtains data descriptive of a state network, wherein the state network includes a starting state, multiple entry states, and transitions from the starting state to each of the multiple entry states. Further, the method determines whether the input sound corresponds to the target keyword based on the sound features and further based on the data.

According to another aspect of the present disclosure, an electronic device for detecting a target keyword including an initial portion and a plurality of subsequent portions is disclosed. The electronic device comprises a sound sensor configured to generate an input sound stream based on an input sound that starts from one of the plurality of subsequent portions of the target keyword, the sound sensor further configured to generate the input sound stream during time periods according to a duty cycle. The device further comprises a voice activation unit configured to determine sound features associated with the input sound based on the input sound stream, to obtain data descriptive of a state network, and to determine whether the input sound corresponds to the target keyword based on the sound features and the data. The state network includes a starting state, multiple entry states, and transitions from the starting state to each of the multiple entry states.

## BRIEF DESCRIPTION OF THE DRAWINGS

Embodiments of the inventive aspects of this disclosure will be understood with reference to the following detailed description, when read in conjunction with the accompanying drawings.

FIG 1 illustrates a mobile device that activates a voice assistant application when a target keyword is detected in an input sound according to one embodiment of the present disclosure.

FIG 2 depicts a block diagram of an electronic device configured to detect a target keyword in an input sound stream for activating a function in the electronic device according to one embodiment of the present disclosure.

FIG 3 describes a block diagram of a sound sensor and a speech detector that are configured to activate a voice activation unit and provide an input sound stream continuously to the voice activation unit according to one embodiment of the present disclosure.

FIG. 4 illustrates a diagram of an input sound stream that is initially received based on a duty cycle, and continuously received once a portion received during an active state of the duty cycle is determined to include sound of sufficient intensity and of interest according to one embodiment of the present disclosure.

FIG. 5 is a more detailed block diagram of a voice activation unit configured to receive an input sound and detect a target keyword in the input sound according to one embodiment of the present disclosure.

FIG. 6 is a flowchart of a method for detecting a target keyword in an input sound stream for activating a voice assistant unit according to one embodiment of the present disclosure.

FIG. 7 describes a diagram of a set of observation scores determined for each of a plurality of sound features for a plurality of states of a target keyword according to one embodiment.

FIG. 8 shows a diagram of a plurality of state sequences for a target keyword under a Markov chain model including a plurality of entry states for use in detection of a target keyword according to one embodiment.

FIG. 9 is a diagram showing greatest keyword scores for each state sequence that ends in each of a plurality of states associated with each sound feature according to one embodiment.

FIG. 10 is a flowchart of a method for determining keyword scores for state sequences to detect a target keyword in an input sound according to one embodiment of the present disclosure.

FIG. 11 depicts a diagram of a reference state sequence for a target keyword for use in determining the number of entry states for the target keyword according to one embodiment of the present disclosure.

FIG. 12 is a flowchart of a method for determining the number of entry states for a target keyword by processing a reference input sound for the target keyword according to one embodiment of the present disclosure.

FIG. 13 is a block diagram of a voice activation unit configured to receive an input sound and detect a target keyword in the input sound based on a predetermined range of durations for each of a plurality of states associated with the target keyword according to another embodiment of the present disclosure.

FIG. 14 shows a block diagram of a plurality of state sequences for a target keyword under a Markov chain model that are generated based on a range of durations for each state associated with the target keyword according to one embodiment.

FIG. 15 is a flowchart of a method for determining a greatest keyword score based on a predetermined range of durations for each state to detect a target keyword according to one embodiment.

FIG. 16 illustrates a block diagram of a mobile device in a wireless communication system in which the methods and apparatus for detecting a target keyword from an input sound to activate a function may be implemented according to some embodiments of the present disclosure.

## DETAILED DESCRIPTION

Reference will now be made in detail to various embodiments, examples of which are illustrated in the accompanying drawings. In the following detailed description, numerous specific details are set forth in order to provide a thorough understanding of the present subject matter. However, it will be apparent to one of ordinary skill in the art that the present subject matter may be practiced without these specific details. In other instances, well-known methods, procedures, systems, and components have not been described in detail so as not to unnecessarily obscure aspects of the various embodiments.

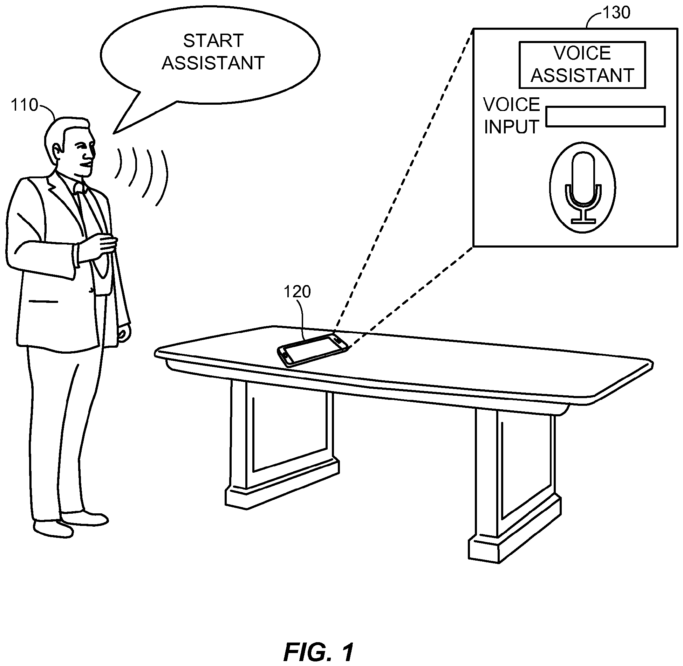

**FIG. 1** illustrates a mobile device 120 that activates a voice assistant application 130 when a target keyword is detected in an input sound according to one embodiment of the present disclosure. Initially, the mobile device 120 stores a target keyword for activating an application or a function such as the voice assistant application 130 in the mobile device 120. In the illustrated embodiment, when a user 110 speaks a target keyword such as "START ASSISTANT" to the mobile device 120, the mobile device 120 captures the input sound and detects the target keyword in the input sound.

Upon detecting the target keyword, the mobile device 120 activates the voice assistant application 130, which can perform additional functions in response to other commands from the user 110. In some embodiments, the mobile device 120 may store a plurality of target keywords for use in detecting the target keywords from user's sound input. Each of the target keywords may be configured to activate an application or a function associated with the target keyword in the mobile device 120.

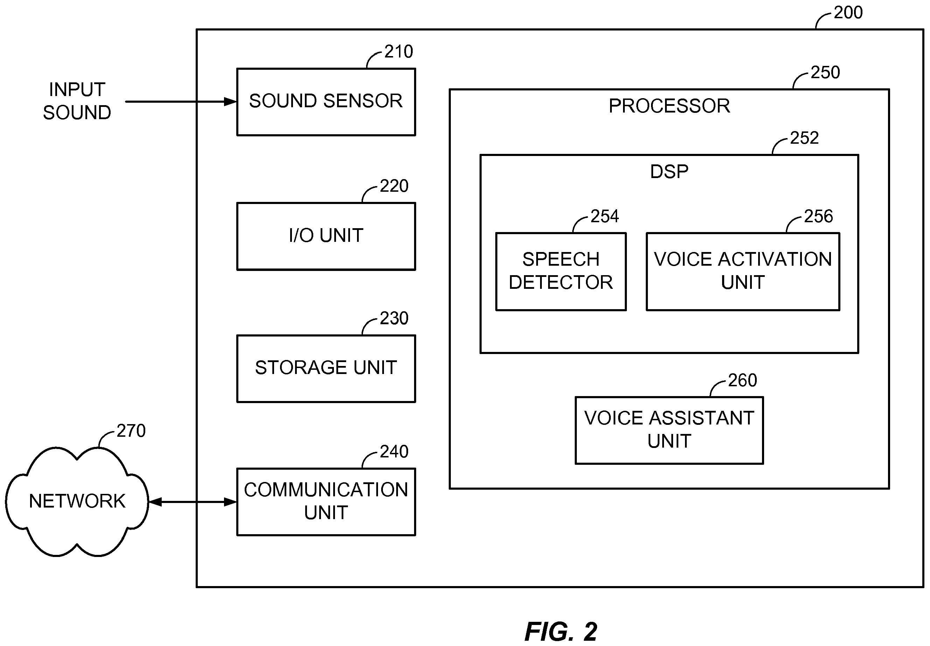

**FIG. 2** depicts a block diagram of an electronic device 200 configured to detect a target keyword in an input sound stream for activating a function in the electronic device 200 according to one embodiment of the present disclosure. As used herein, the term "sound stream" refers to a sequence of one or more sound signals or sound data. Further, the term "target keyword" refers to any digital or analog representation of one or more words or sound that can be used to activate a function or an application in the electronic device 200. The electronic device 200 includes a sound sensor 210, an I/O unit 220, a storage unit 230, a communication unit 240, and a processor 250. The electronic device 200 may be any suitable devices equipped with a sound capturing and processing capability such as a cellular phone, a smartphone (e.g., the mobile device 120), a personal computer, a laptop computer, a tablet personal computer, a smart television, a gaming device, a multimedia player, etc.

The processor 250 includes a digital signal processor (DSP) 252 and a voice assistant unit 260, and may be an application processor or a central processing unit (CPU) for managing and operating the electronic device 200. The DSP 252 includes a speech detector 254 and a voice activation unit 256. In one embodiment, the DSP 252 is a low power processor for reducing power consumption in processing sound streams. In this configuration, the voice activation unit 256 in the DSP 252 is configured to activate the voice assistant unit 260 when the target keyword is detected in an input sound stream. Although the voice activation unit 256 is configured to activate the voice assistant unit 260 in the illustrated embodiment, it may also activate any function or application that may be associated with a target keyword.

The sound sensor 210 may be configured to receive an input sound stream and provide it to the speech detector 254 in the DSP 252. The sound sensor 210 may include one or more microphones or any other types of sound sensors that can be used to receive, capture, sense, and/or detect a sound input to the electronic device 200. In addition, the sound sensor 210 may employ any suitable software and/or hardware for performing such functions.

In one embodiment, the sound sensor 210 may be configured to receive the input sound stream periodically according to a duty cycle. In this case, the sound sensor 210 may determine whether the received portion of the input sound stream exceeds a threshold sound intensity. When the received portion of the sound stream exceeds the threshold intensity, the sound sensor 210 activates the speech detector 254 and provides the received portion to the speech detector 254 in the DSP 252. Alternatively, without determining whether the received portion exceeds a threshold sound intensity, the sound sensor 210 may receive a portion of the input sound stream periodically and activate the speech detector 254 to provide the received portion to the speech detector 254.

For use in detecting the target keyword, the storage unit 230 stores the target keyword and state information on a plurality of states associated with a plurality of portions of the target keyword. In one embodiment, the target keyword may be divided into a plurality of basic units of sound such as phones, phonemes, or subunits thereof, and the plurality of portions representing the target keyword may be generated based on the basic units of sound. Each portion of the target keyword is then associated with a state under a Markov chain model such as a hidden Markov model ("HMM"), a semi-Markov model ("SMM"), or a combination thereof. The state information may include a predetermined number of entry states among the states associated with the target keyword and transition information from each of the states to a next state including itself. The storage unit 230 may be implemented using any suitable storage or memory devices such as a RAM (Random Access Memory), a ROM (Read-Only Memory), an EEPROM (Electrically Erasable Programmable Read-Only Memory), a flash memory, or an SSD (solid state drive).

The speech detector 254 in the DSP 252, when activated, receives the portion of the input sound stream from the sound sensor 210. In one embodiment, the speech detector 254 extracts a plurality of sound features from the received portion and determines whether the extracted sound features indicate sound of interest such as speech by using any suitable sound classification method such as a Gaussian mixture model (GMM) based classifier, a neural network, the HMM, a graphical model, and a Support Vector Machine (SVM) technique. If the received portion is determined to be sound of interest, the speech detector 254 activates the voice activation unit 256 and the received portion and the remaining portion of the input sound stream are provided to the voice activation unit 256. In some other embodiments, the speech detector 254 may be omitted in the DSP 252. In this case, when the received portion exceeds the threshold intensity, the sound sensor 210 activates the voice activation unit 256 and provides the received portion and the remaining portion of the input sound stream directly to the voice activation unit 256.

The voice activation unit 256, when activated, is configured to continuously receive the input sound stream and detect the target keyword from the input sound stream. As the input sound stream is received, the voice activation unit 256 may sequentially extract a plurality of sound features from the input sound stream. In addition, the voice activation unit 256 may obtain the state information including the plurality of states, the predetermined number of entry states, and transition information for the target keyword from the storage unit 230. For each sound feature, an observation score may be determined for each of the states by using any suitable probability model such as the GMM, the neural network, and the SVM.

From the transition information, the voice activation unit 256 may obtain transition scores from each of the states to a next state in a plurality of state sequences that are possible for the target keyword. The transition information may also include transition scores for the predetermined number of entry states to allow the voice activation unit 256 to detect the target keyword in the input sound stream based on the multiple entry states associated with the basic units of sound of the target keyword. By providing such multiple entry states into the target keyword, the voice activation unit 256 may detect the target keyword by processing the input sound stream that starts after the beginning of the target keyword.

After determining the observation scores and obtaining the transition scores, the voice activation unit 256 determines keyword scores for the possible state sequences. In one embodiment, if the greatest keyword score among the determined keyword scores exceeds a predetermined threshold score, the voice activation unit 256 detects the input sound stream as the target keyword. Upon detecting the target keyword, the voice activation unit 256 generates and transmits an activation signal to turn on the voice assistant unit 260, which is associated with the target keyword.

The voice assistant unit 260 is activated in response to the activation signal from the voice activation unit 256. Once activated, the voice assistant unit 260 may perform a voice assistant function by outputting a message such as "MAY I HELP YOU?" on a touch screen and/or through a speaker of the I/O unit 220. In response, a user may speak voice commands to activate various associated functions of the electronic device 200. For example, when a voice command for Internet search is received, the voice assistant unit 260 may recognize the voice command as a search command and perform a web search via the communication unit 240 through the network 270.

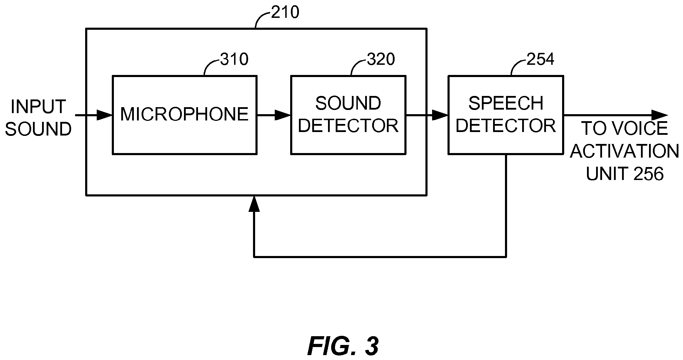

FIG. 3 describes a block diagram of the sound sensor 210 and the speech detector 254 that are configured to activate the voice activation unit 256 and provide an input sound stream continuously to the voice activation unit 256 according to one embodiment of the present disclosure. The sound sensor 210 includes a microphone 310 and a sound detector 320. In one embodiment, the microphone 310 and the sound detector 320 are configured to receive the input sound stream periodically based on a duty cycle. For example, the microphone 310 and the sound detector 320 may operate on a 10 % duty cycle such that they receive the input sound stream 10 % of the time (e.g., 20 ms in a 200 ms period). As illustrated, the microphone 310 may be configured to receive the input sound stream during each active state of the duty cycle and provide the received portion of the input sound stream to the sound detector 320. In this process, the microphone 310 may also convert the received sound stream into a digital form.

The sound detector 320 may analyze signal characteristics of the received portion of the input sound stream and determine whether the received portion exceeds a threshold sound intensity. For example, the sound detector 320 may analyze sound energy values or amplitude values of the received portion to determine the sound intensity of the received portion. If the received portion is determined to be sound exceeding the threshold sound intensity, the sound detector 320 may provide an activation signal and the received portion to the speech detector 254.

The speech detector 254, when activated, receives the portion of the input sound stream from the sound detector 320. The speech detector 254 may then extract one or more sound features from the received portion by using any suitable signal processing scheme such as MFCC (Mel-frequency cepstral coefficients), LPC (linear predictive coding), or LSP (line spectral pair) method. Using the extracted sound features, the speech detector 254 classifies the received portion of the input sound stream to determine whether the received portion includes speech.

In the illustrated embodiment, if the received portion of the input sound stream is determined to exceed the threshold sound intensity and include speech, the duty cycle function may be disabled to provide the remaining portion of the input sound stream to the voice activation unit 256 continuously (e.g., using a full duty cycle or a 100% duty cycle). According to one embodiment, if the sound detector 320 determines that the received portion exceeds a threshold sound intensity, it disables the duty cycle function of the sound sensor 210 so that the microphone 310 and the sound detector 320 may continue to operate in an active state to receive and transmit the remaining portion of the input sound stream to the speech detector 254. If the speech detector 254 determines that the initial portion received during the active state of the duty cycle includes speech, the speech detector 254 provides the initial portion and the remaining portion of the input sound stream to the voice activation unit 256. On the other hand, if the speech detector 254 determines that the initial portion does not include speech, the speech detector 254 generates an activation signal, which is provided to the sound sensor 210 to activate the duty cycle function for the microphone 310 and the sound detector 320.

In another embodiment, if the sound detector 320 determines that the received portion exceeds a threshold sound intensity, it activates the speech detector 254 and provides the received portion to the speech detector 254. If the speech detector 254 determines that the received portion includes speech, the speech detector 254 provides the microphone 310 and the sound detector 320 with a deactivation signal of the duty cycle function. Upon receiving the deactivation signal, the microphone 310 and the sound detector 320 may continue to operate in an active state to receive and transmit the remaining portion of the input sound stream to the speech detector 254 so that the speech detector 254 provides the portions to the voice activation unit 256. On the other hand, if the speech detector 254 determines that the initial portion received during the active state of the duty cycle does not include speech, the speech detector 254 does not provide the activation signal to the microphone 310 and the sound detector 320 such that the microphone 310 and the sound detector 320 operate according to the duty-cycle function.

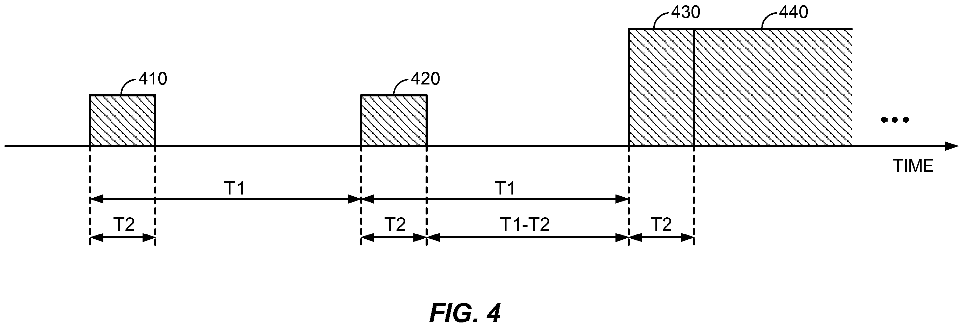

FIG. 4 illustrates a diagram of an input sound stream that is initially received based on a duty cycle and continuously received once a portion received during an active state of the duty cycle is determined to include sound of sufficient intensity and of interest according to one embodiment of the present disclosure. As shown, a plurality of portions 410, 420, and 430 of an input sound stream are received periodically based on a duty cycle. The portions 410 and 420 do not include sound of sufficient intensity or of interest (e.g., speech). On the other hand, the portion 430 includes sound that exceeds threshold sound intensity and includes speech. Thus, the portion 430 and a remaining portion 440 of the input sound stream are received continuously and provided to the voice activation unit 256 for detecting a target keyword.

In the illustrated diagram, a period between the starts of one portion (e.g., the portion 410) and a next portion (e.g., the portion 420) represents a duty cycle period T1. A period T2 represents the time duration in which the duty cycle is in an active state. The inactive state of the duty cycle is indicated by T1-T2, during which time period the input sound stream is not received. Due to receiving an input sound stream according to a duty cycle, the initial portion 430 of the input sound stream that is provided to the voice activation unit 256 for detecting a target keyword may correspond to a portion of the target keyword that is subsequent to the beginning portion of the target keyword.

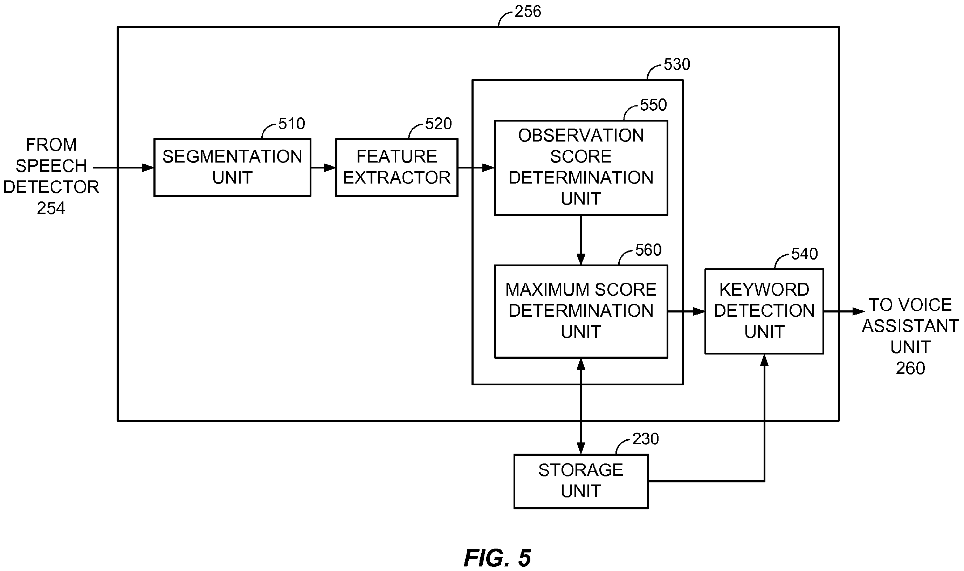

FIG. 5 depicts a more detailed block diagram of the voice activation unit 256 configured to receive an input sound and detect a target keyword in the input sound, according to one embodiment of the present disclosure. The voice activation unit 256 includes a segmentation unit 510, a feature extractor 520, a score determination unit 530, and a keyword detection unit 540. The score determination unit 530 includes an observation score determination unit 550 and a maximum keyword score determination unit 560.

The segmentation unit 510 receives the input sound from the speech detector 254 and segments the received input sound into a plurality of sequential frames of an equal time period. The feature extractor 520 sequentially receives the frames from the segmentation unit 510 and extracts a sound feature from each of the frames. In one embodiment, the feature extractor 520 may extract the sound features from the frames using any suitable feature extraction method such as the MFCC method. For example, in the case of the MFCC method, components in an n-dimensional vector are calculated from each of the segmented frames and the vector is used as a sound feature.

In the score determination unit 530, the observation score determination unit 550 sequentially receives the sound features and receives state information for the target keyword from the storage unit 230. According to one embodiment, the state information for the target keyword may include a plurality of states associated with a plurality of portions of the target keyword and a probability model (e.g., probability function) such as the GMM that is provided for each of the states. As described above, the target keyword may be divided into a plurality of basic units of sound and the plurality of portions representing the target keyword may be generated based on the basic units of sound corresponding to the states. In some embodiments, the states for the target keyword may also include a non-keyword state (e.g., a "filler" state), which is not associated with any of the plurality of portions representing the target keyword and which may be used as a starting state. For example, in the case of a target keyword including a predetermined number of states, each of which corresponds to a basic unit of sound such as a phone, a non-keyword state may represent basic units of sound other than those that are included in the target keyword.

As each sound feature is received, the observation score determination unit 550 determines an observation score for each of the states associated with the target keyword based on the sound feature and the state information received from the storage unit 230. In one embodiment, the observation score for each of the states is determined for the received sound feature by calculating a probability value according to the probability model for the associated state. Each of the probability values thus calculated may be used as the observation score for the associated state. A high observation score for a state indicates a high probability that the sound feature corresponds to a basic unit of sound for the state. The observation score determination unit 550 provides the observation scores for each of the received sound features to the maximum keyword score determination unit 560 for determining keyword scores for a plurality of state sequences, which are possible for the target keyword.

The maximum keyword score determination unit 560 receives the observation scores for each of the sound features and obtains the state information from the storage unit 230. In this configuration, the state information may include the plurality of states for the target keyword including the non-keyword state (including a single, non-keyword starting state), a predetermined number of entry states among the plurality of states, and transition information from each of the states to a next state including itself. An entry state represents a first state to which the non-keyword state (or starting state) may transition in each of possible state sequences for the target keyword.

The transition information in the state information includes a transition score from each of the states to a next state in each of the possible state sequences for the target keyword. The transition score may represent a probability value that each of the states transitions to the next state in each possible state sequence. The transition score also includes transition scores from the non-keyword state to the predetermined number of entry states.

Based on the received observation scores and the transition scores, the maximum keyword score determination unit 560 calculates a keyword score for each of the possible state sequences. In this case, a state sequence may start from a non-keyword state (i.e., a starting state) since the non-keyword state is assigned before the input sound is received. As such, the transition scores include a transition score from the non-keyword state to any one of the entry states, and also include a transition score from the non-keyword state to itself in the state sequence. As a set of observation scores for each sound feature is received from the observation score determination unit 550, the maximum keyword score determination unit 560 adds a next state to each state sequence and determines a keyword score for each of the updated state sequences in the manner as described above.

As a set of keyword scores are calculated for the state sequences, the maximum keyword score determination unit 560 selects the greatest keyword score among the keyword scores. The keyword scores may be calculated to determine the greatest keyword score by using any suitable method such as a Viterbi algorithm. After determining the greatest keyword score, the maximum keyword score determination unit 560 provides it to the keyword detection unit 540. In one embodiment, a greatest keyword score is provided to the keyword detection unit 540 only when a last state of a state sequence having the greatest keyword score corresponds to the last basic unit of sound (e.g., the last phone) for the target keyword.

Upon receiving the greatest keyword score from the maximum keyword score determination unit 560, the keyword detection unit 540 detects the target keyword in the input sound based on the greatest keyword score. For example, the keyword detection unit 540 may receive a threshold score for detecting the target keyword from the storage unit 230 and detect the target keyword if the greatest keyword score is greater than the received threshold score. In this case, the threshold score may be set to a minimum keyword score for detecting the target keyword within a desired confidence level.

In some embodiments, the maximum keyword score determination unit 560 determines a non-keyword score for a non-keyword state sequence. The non-keyword score may be obtained from the keyword scores for the possible state sequences including the non-keyword state sequence and provided to the keyword detection unit 540. The keyword detection unit 540 determines a confidence value based on a difference between the greatest keyword score and the non-keyword score, and detects the target keyword in the input sound. In this case, the keyword detection unit 540 may receive a threshold confidence value from the storage unit 230 and detect the target keyword if the confidence value is greater than the threshold confidence value. Using the difference between the greatest keyword score and the non-keyword score in detecting the target keyword may improve detection accuracy particularly when the input sound includes ambient sound such as noise that may affect keyword scores. Once the target keyword is detected, the keyword detection unit 540 generates and provides an activation signal to turn on the voice assistant unit 260, which is associated with the target keyword.

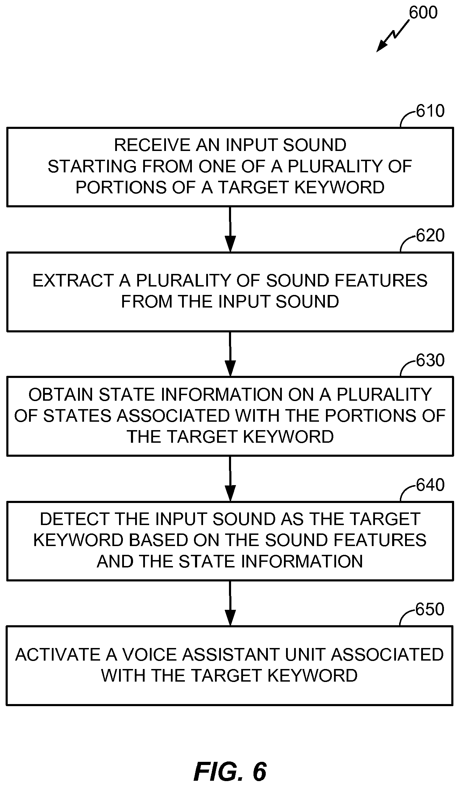

FIG. 6 is a flowchart of a method 600, performed by the voice activation unit 256, for detecting a target keyword in an input sound for activating the voice assistant unit 260 according to one embodiment of the present disclosure. The target keyword may include an initial portion and a plurality of subsequent portions. Initially, the voice activation unit 256 receives the input sound that starts from one of the subsequent portions of the target keyword, at 610. After the received input sound is segmented to a plurality of frames, the voice activation unit 256 extracts a plurality of sound features from the plurality of frames, at 620, by using any suitable signal processing scheme such as the MFCC method.

Then at 630, the voice activation unit 256 obtains state information associated with the initial portion and the subsequent portions of the target keyword from the storage unit 230. As described above with reference to **FIGS. 2** and **5**, the state information may include a predetermined number of entry states, a probability model, and transition information. Based on the extracted sound features and the state information, the voice activation unit 256 detects the input sound as the target keyword, at 640. Once the target keyword is detected, the voice activation unit 256 activates the voice assistant unit 260, which is associated with the target keyword, at 650.

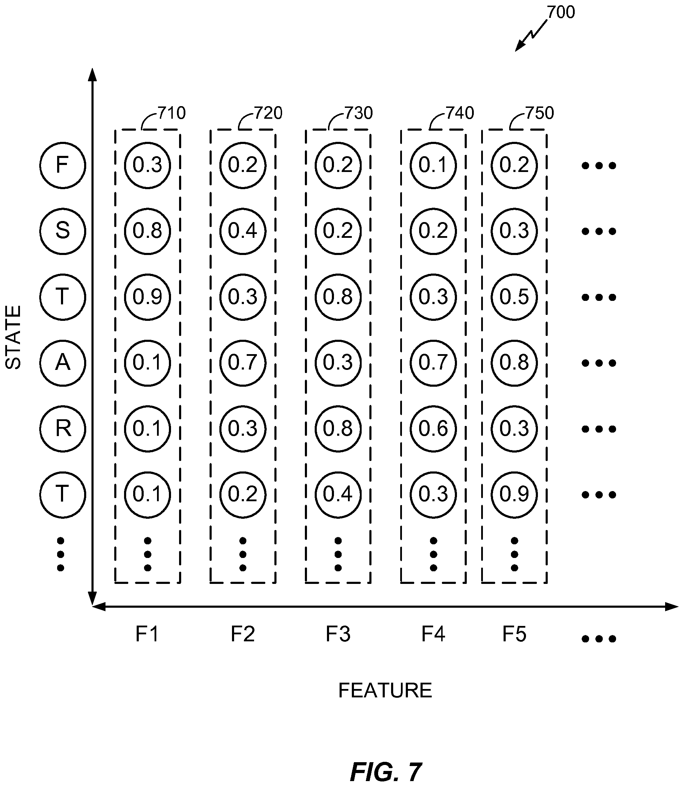

FIG. 7 illustrates a diagram 700 of a set of observation scores generated by the observation score determination unit 550 for each of a plurality of sound features F1 to F5 for a plurality of states of a target keyword (e.g., "START ASSISTANT") according to one embodiment. The states of the target keyword shown in the diagram 700 include "F," "S," "T," "A," "R," "T," etc. where the state "F" indicates a non-keyword or filler state. The observation score determination unit 550 sequentially receives a sound feature extracted from each frame. For each sound feature, the observation score determination unit 550 determines an observation score for each of the states, for example, by using the probability model such as the GMM, as indicated by a number for each state and sound feature in the diagram 700.

In the illustrated embodiment, when the observation score determination unit 550 receives each of the sound features F1, F2, F3, F4, and F5, which are received sequentially in predetermined time intervals, a set of observation scores for the states is determined. For example, in the case of the sound feature F1, a set of the observation scores 710 is determined for the states (i.e., states "F," "S," "T," "A," "R," "T," etc.). After determining the set of the observation scores 710 for the sound feature F1, the observation score determination unit 550 may sequentially determine a plurality of sets of observation scores 720 to 750 for the sound feature F2 to F5, respectively. The observation score determination unit 550 may sequentially provide the sets of observation scores 710 to 750 for the sound feature F1 to F5, respectively, to the maximum keyword score determination unit 560 for detecting the target keyword.

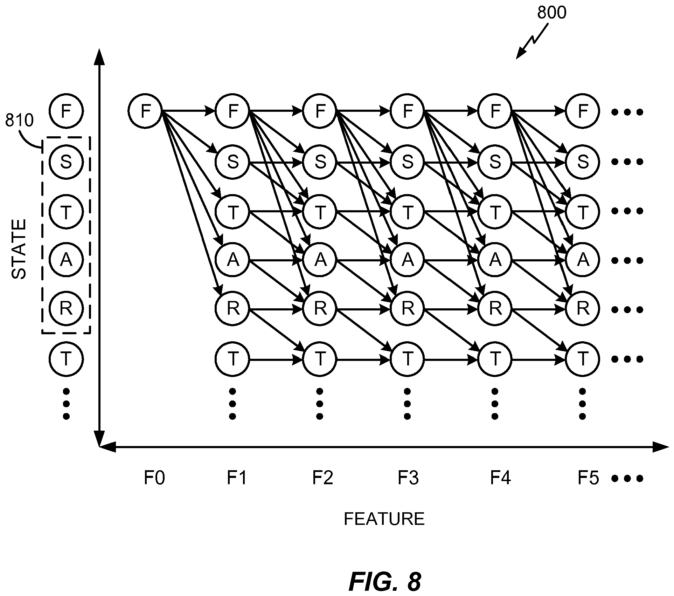

FIG. 8 shows a diagram 800 of a state network including a plurality of state sequences that are possible for a target keyword under the Markov chain model including a plurality of entry states "S," "T," "A," and "R" for use in detection of the target keyword according to one embodiment. In one embodiment, the number of the entry states may be predetermined. In the illustrated embodiment of FIG. 8, the predetermined number of the entry states is four as indicated by a set of the entry states 810 in the diagram 800. Further, the diagram 800 shows transition lines from each of current states associated with a current sound feature (e.g., the sound feature F1) to a plurality of next states associated with a next sound feature (e.g., the sound feature F2) in a plurality of state sequences that are possible for the target keyword.

Initially, a sound feature F0 in the diagram 800 indicates that an input sound has not been received. Once the input sound is received, the sound features F1 to F5 are sequentially extracted from the received input sound. As such, the non-keyword state "F" is only assigned to the sound feature F0 and serves as a single starting state for all the state sequences. The diagram 800 also shows transition lines from the starting state "F" for the sound feature F0 to each of the possible next states associated with the next sound feature F1, i.e., the entry states "S," "T," "A," and "R." Then at the sound feature F1, a transition line from each of the states for the sound feature F1 to each of the states for the next sound feature F2 (i.e., a next state) is shown for each of the possible state sequences. Such transition lines may be predetermined for the target keyword and applied to each of the remaining sound features F2, F3, F4, and F5 of the received input sound in the same manner, as shown in the diagram 800.

In this configuration, each transition line is associated with a transition score. Some of the states may not have transition lines to some of the next states. For example, a transition line from the state "S" for a sound feature to states "A," "R," and "T" for a next sound feature is not provided. In one embodiment, if there is no transition line from a current state to a next state, a state sequence from the current state to the next state may not be generated. In another embodiment, where a transition line is not provided from one state to a next state, a transition score may be set to be a large negative number (e.g., -10) to ensure that a state sequence including such a transition score may not have a greatest keyword score for use in detecting the target keyword.

Based on the diagram 800, an exemplary table of transition scores that are associated with transition lines and no transition lines may be provided as follows.

Table 1

| Next State<br>Current state | F | S | T | A | R | T | … |
|---|---|---|---|---|---|---|---|
| F | 0.7 | 0.8 | 0.8 | 0.7 | 0.9 | -10 | … |
| S | -10 | 0.9 | 0.8 | -10 | -10 | -10 | … |
| T | -10 | -10 | 0.7 | 0.8 | -10 | -10 | … |
| A | -10 | -10 | -10 | 0.8 | 0.9 | -10 | … |
| R | -10 | -10 | -10 | -10 | 0.7 | 0.6 | … |
| T | -10 | -10 | -10 | -10 | -10 | 0.8 | … |
| ⋮ | ⋮ | ⋮ | ⋮ | ⋮ | ⋮ | ⋮ | ⋮ |

As shown in **Table 1**, in the case of no transition line from a current state (e.g., the state "S") to a next state (e.g., the state "A"), an associated transition score of -10 is assigned. Initially, since a current state "F" has four transition lines to the entry states "S," "T," "A," and "R," transition scores of 0.8, 0.8, 0.7, and 0.9 are assigned to the four transition lines from the current state "F" to the entry states "S," "T," "A," and "R." By providing the plurality of entry states, even if the voice activation unit 256 receives an input sound that does not start from the beginning portion of the target keyword (i.e., the state "S"), the target keyword may be detected from such an input sound.

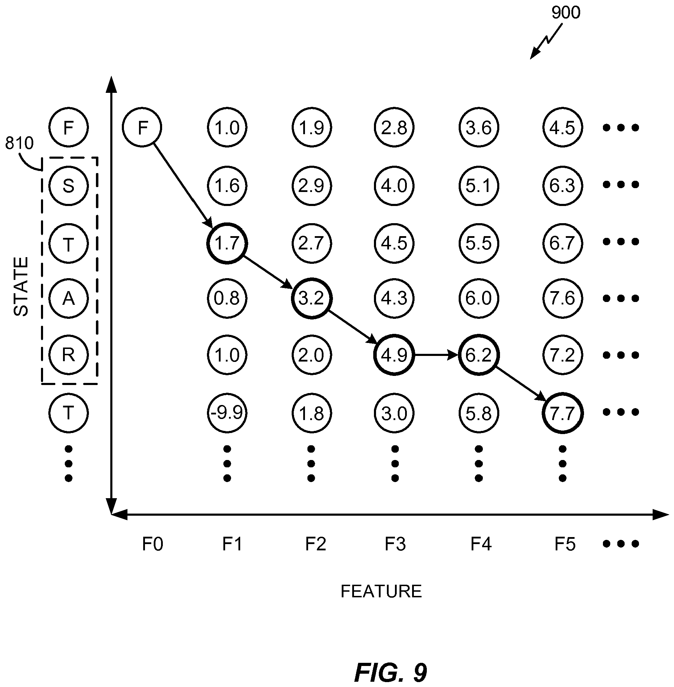

**FIG. 9** is a diagram 900 showing greatest keyword scores for each sequence that ends in each of a plurality of states associated with each sound feature according to one embodiment. In this diagram 900, the target keyword, "START ASSISTANT," includes the states associated with each of the basic units of sound. For ease of explanation, the diagram 900 is illustrated using phones ("S," "T," "A," "R," "T," etc.) as basic units of sound.

In this embodiment, among keyword scores that are determined for possible state sequences that ends in each of the states associated with each sound feature, a greatest keyword score is determined. Such greatest keyword scores are then used as candidate keyword scores in detecting the target keyword, for example, by selecting a greatest keyword score among the candidate keyword scores and comparing the selected greatest keyword score with a threshold score. Further, the candidate keyword scores may be used in determining greatest keyword scores for possible state sequences that ends in each of the states associated with each next sound feature (i.e., next candidate keyword scores). The candidate keyword scores and the selected greatest keyword score may be determined by using the Viterbi algorithm based on the observation scores provided in **FIG. 6** and the transition scores provided in **Table 1**.

In the diagram 900, in the case of the sound feature F1, each of the illustrated states "F," "S," "T," "A," "R," and "T" has one possible state sequence from the starting state "F" for the sound feature F0, and greatest scores (i.e., candidate scores) for the states are determined as 1.0, 1.6, 1.7, 0.8, 1.0, and -9.9, respectively. The candidate keyword scores may be determined by summing a transition score from the non-keyword state "F" to each of the states for the sound feature F1 and an observation score of the associated state for the sound feature F1. For example in this manner, the candidate score 1.7 for the state "T" included in the set of entry states 810 is determined by summing a transition score from the non-keyword state "F" to the state "T" and an observation score for the state "T." In the illustrated example, a large negative number (e.g., -10) is assigned as the transition score to the state "T" which is not included in the set of entry states 810 such that any consecutive state sequence including the state "T" at the point of the sound feature F1 cannot have a greatest keyword score for use in detecting the target keyword.

In the case of the sound feature F2, a candidate keyword score is determined for each state by summing a candidate keyword score for state sequences having each of the states for the sound feature F1 as a last state, a transition score from each state for the sound feature F1 to the state for the sound feature F2, and an observation score of the state for the sound feature F2. For each of the states associated with the sound feature F2, the greatest sum among the above sums is selected as the candidate keyword score for possible state sequences having the state as a last state. For example, keyword scores for possible state sequences having the state "A" for the sound frame F2 as a last state are provided in **Table 2** as follows.

**Table 2**

| Previous state | Previous candidate keyword score | Transition score to current state "A" | Observation score for state "A" associated with sound feature F2 | Sum |
|---|---|---|---|---|
| F | 1.0 | 0.7 | 0.7 | 2.4 |
| S | 1.6 | -10 | 0.7 | -7.7 |
| T | 1.7 | 0.8 | 0.7 | 3.2 |
| A | 0.8 | 0.8 | 0.7 | 2.3 |
| R | 1.0 | -10 | 0.7 | -8.3 |
| T | -9.9 | -10 | 0.7 | -19.2 |

In **Table 2** above, the greatest keyword score of 3.2 among the sums above is selected as the candidate keyword score for possible state sequences having the state "A" associated with the sound feature F2. In the same manner, the candidate keyword scores for the other illustrated states, i.e., "F," "S," "T," "R," "T" may be determined as 1.9, 2.9, 2.7, 2.0, and 1.8. The candidate keyword score of 3.2 for the state "A" may then be selected as the greatest keyword score for the sound feature F2 as shown in the diagram 900.

For each of the remaining sound features F3, F4, and F5, a set of candidate keyword scores for possible state sequences having as a last state each of the states associated with each of the remaining sound features F3, F4, and F5 may be calculated in the same manner as the sound feature F2. Among the candidate keyword scores, the greatest keyword score for each of the sound features F3, F4, and F5 may also be determined in a similar manner. The greatest keyword score for each of the sound features F1 to F5 may be used to detect the target keyword. In the illustrated example of **FIG. 9**, the state sequence including the states of the greatest keyword scores thus determined, as indicated by arrows and circles of a bold line, may correspond to the plurality of sequential portions of the target keyword.

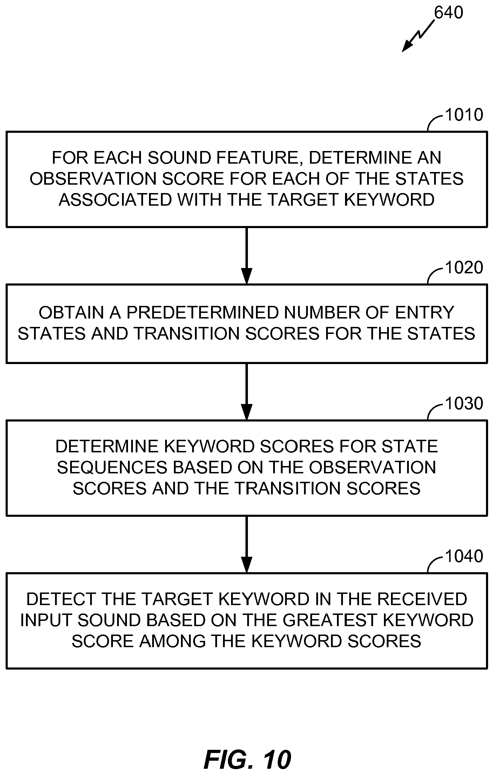

**FIG. 10** is a flowchart of a detailed method 640, performed by the voice activation unit 256, for detecting a target keyword in an input sound according to one embodiment of the present disclosure. Initially, the observation score determination unit 550 receives a plurality of sound features of the input sound and determines an observation score for each of a plurality of states associated with the target keyword at 1010. The observation scores are provided to the maximum keyword score determination unit 560. At 1020, the maximum keyword score determination unit 560 obtains a predetermined number of entry states and a transition score from each of the states to a next state in a plurality of state sequences that are possible for the target keyword. The transition scores may include a transition score from a non-keyword state to each of the entry states.

The maximum keyword score determination unit 560 determines keyword scores for the possible state sequences by using the observation scores and the transition scores at 1030. In this process, the greatest keyword scores may be selected among the determined keyword scores and provided to the keyword detection unit 540 in the manner as described above with reference to **FIGS. 5** and **9**. Then at 1040, the target keyword is detected in the input sound based on the received greatest keyword scores.

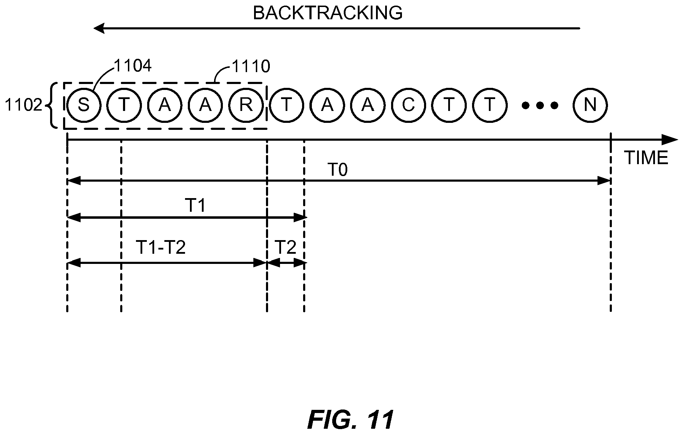

**FIG. 11** depicts a diagram of a reference state sequence 1102 for a target keyword "START ACTIVATION" for use in determining the number of entry states for the target keyword according to one embodiment of the present disclosure. In one embodiment, the determination of the number of entry states may be performed in the score determination unit 530. As shown, a reference input sound for the target keyword is captured over a time period T0 without using a duty cycle (i.e., based on a full duty cycle) so that all portions of the keyword are received. The reference input sound is a sound spoken by a user over the time period T0 and may be segmented into a plurality of sequential frames of an equal time period. In the illustrated embodiment, the plurality of frames corresponds to the states in the reference state sequence 1102 for the target keyword. For each frame, a sound feature may be extracted and stored in the storage unit 230.

In one embodiment, the score determination unit 530 receives the extracted sound features from the storage unit 230 and determines the greatest keyword score for all possible state sequences in the manner as described above with reference to **FIGS. 5** to **9**. In this case, the entire reference state sequence 1102 starting from a single entry state 1104 may be used in the determination of the greatest keyword score. The states in the reference state sequence 1102 and the numbers of each state may be determined by backtracking the reference state sequence 1102. In this embodiment, the number of entry states for the reference state sequence 1102 may be determined based on a period of time in which some portions of the target keyword may not be received during an inactive state T1-T2 in a duty cycle of T2/T1. For example, when an input sound spoken by a user is received according to the duty cycle, a plurality of states 1110 (i.e., "S," "T," "A," "A," and "R") associated with a plurality of portions of the target keyword corresponding to the inactive state may not be received.

As shown in **FIG. 11**, the state "A" may appear twice in the states 1110 due to the speech characteristics (e.g., speed of speech) of the user. Since the states 1110 corresponding to the initial inactive period T1 - T2 of the duty cycle include four initial states "S," "T," "A," and "R," an input sound may not include up to the four initial states when the input sound is received based on the duty cycle. In this example, the number of entry states may be determined to be five or more so that the target keyword can be detected in speech spoken by the user even when the speech starts within the inactive state and starts to be received in the following active state of the duty cycle. In this case, the beginning portion of the received speech may start from any one of the entry states.

In one embodiment, the score determination unit 530 may receive a plurality of reference input sounds for the target keyword, each of which is captured based on a full duty cycle. For each of the reference input sounds, the score determination unit 530 determines entry states according to an initial inactive period in a duty cycle by determining a reference state sequence and state time periods for a plurality of states in the reference state sequence in a similar manner as described above with respect to the reference state sequence 1102. The numbers of the entry states in the reference state sequences may then be averaged to determine entry states for use in detecting the target keyword from an input sound.

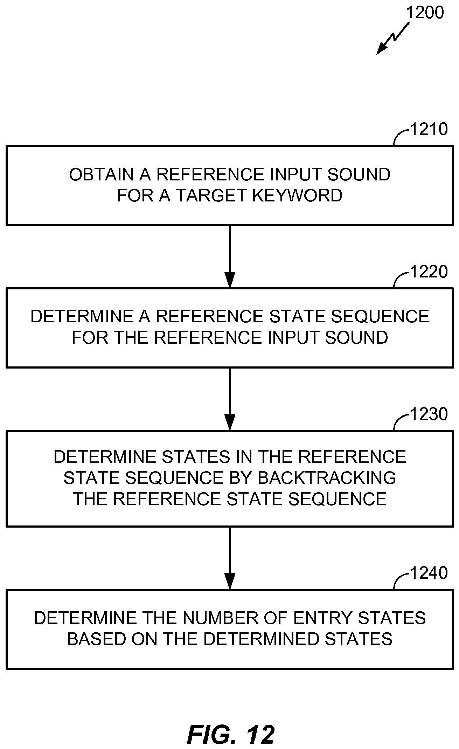

**FIG. 12** is a flowchart of a method 1200, performed by the voice activation unit 256, for determining the number of entry states for a target keyword by processing a plurality of reference input sounds for the target keyword according to one embodiment of the present disclosure. Initially, the voice activation unit 256 receives the reference input sounds for the target keyword based on a full duty cycle, at 1210. The voice activation unit 256 obtains state information associated with an initial portion and a plurality of subsequent portions of the target keyword, at 1220.

At 1230, a plurality of reference state sequences for the reference input sounds are determined based on the state information. At 1240, the voice activation unit 256 determines a plurality of state time periods for a plurality of states in the reference state sequences by backtracking the reference state sequences, as described in detail with reference to **FIG. 11**. Then at 1250, the voice activation unit 256 determines a plurality of entry states based on the state time periods and an inactive period of a duty cycle.

The voice activation unit 256 may be configured to segment an input sound into portions of variable durations to detect a target keyword in the input sound. In some embodiments, a possible range of such durations for each of the states associated with the target keyword may be predetermined. For each duration associated with each state, a score (e.g., a probability value) may be assigned for determining a greatest keyword score.

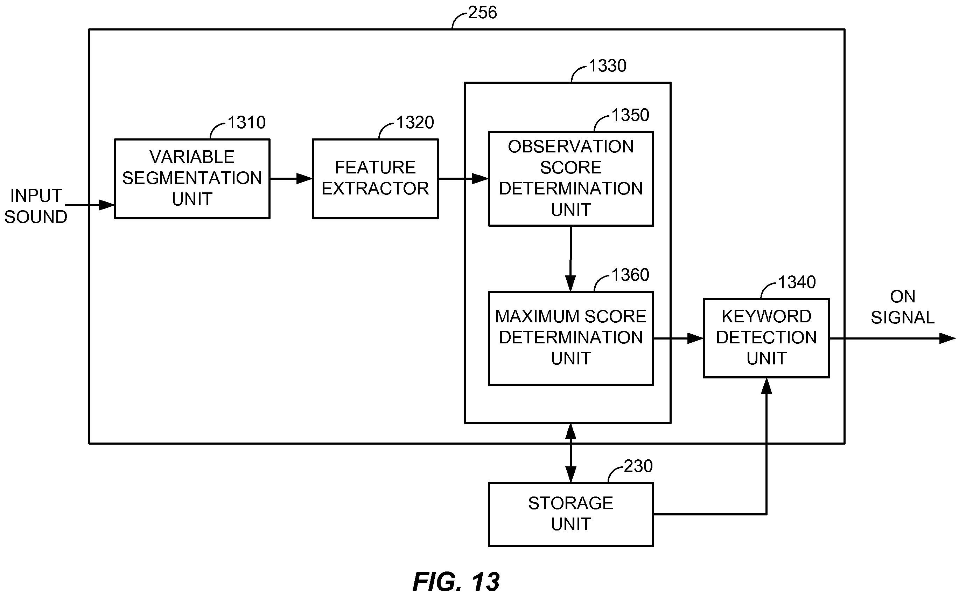

**FIG. 13** depicts a block diagram of the voice activation unit 256 configured to receive an input sound and detect a target keyword in the input sound based on a predetermined range of durations under the SMM according to another embodiment of the present disclosure. The voice activation unit 256 includes a variable segmentation unit 1310, a feature extractor 1320, a score determination unit 1330, and a keyword detection unit 1340. The score determination unit 1330 includes an observation score determination unit 1350 and a maximum keyword score determination unit 1360.

The variable segmentation unit 1310 receives the input sound from a sound sensor (e.g., the sound sensor 210) and segments the received input sound into a plurality of frames having a plurality of durations. For example, if an input sound of a 30 ms duration is received, it may be segmented into a first frame of a 10 ms duration, which is located from 0 ms to 10 ms in the input sound. In a similar manner, the input sound may be segmented into a second frame of a 10 ms duration from 10 to 20 ms, and a third frame of a 10 ms duration from 20 ms to 30 ms, a fourth frame of a 20 ms duration from 0 ms to 20 ms, and a fifth frame of a 20 ms duration from 10 ms to 30 ms.

The variable segmentation unit 1310 may provide the plurality of segmented frames to the feature extractor 1320 and the entire input sound as an input sound frame (e.g., a 30 ms duration in the above example) to the feature extractor 1320. In this process, the variable segmentation unit 1310 also provides the feature extractor 1320 with frame information on a duration and a location of each frame. Upon receiving the frames and the frame information, the feature extractor 1320 extracts and outputs a sound feature from each of the frames using any suitable feature extraction method. In the above example, the feature extractor 1320 receives a total of six frames and extracts a total of six sound features from the frames.

The score determination unit 1330 is configured to generate a greatest keyword score to be provided to the keyword detection unit 1340 based on the extracted sound features. The observation score determination unit 1350 in the score determination unit 1330 receives the sound features and the frame information from the feature extractor 1320. The observation score determination unit 1350 also receives state information for the target keyword from the storage unit 230. The state information includes a plurality of states associated with the target keyword and a probability model for each of the states, as described above with reference to **FIG. 5**.

In this embodiment, the state information further includes duration information on a range of durations that is predetermined for each of the states. The predetermined range of durations for each state may be set to a possible time range for the state. For example, a user may speak a sound corresponding to the state "S" in a relatively short duration while another user may take longer to speak the sound. Accordingly, the predetermined range of durations for a state may be set to include a range of durations that users may typically take in speaking a sound associated with the state.

For each received sound feature associated with a specified duration, the observation score determination unit 1350 may decide on whether to determine an observation score for each of the states based on the received state information. In one embodiment, the observation score determination unit 1350 determines whether the duration is not within the predetermined range of durations for each state based on the frame information which includes the duration. If the duration is determined not to be within the predetermined range of durations, the observation score determination unit 1350 decides not to determine the observation score. Otherwise, the observation score determination unit 1350 proceeds to determine the observation score.

In determining the observation score, a probability value for each of the states may be calculated according to a probability model for the associated state. The calculated probability value may be used as an observation score for the associated state. The observation score determination unit 1350 then provides the determined observation scores for each sound feature to the maximum keyword score determination unit 1360 for determining keyword scores for a plurality of state sequences, which are possible for the target keyword.

The maximum keyword score determination unit 1360 then receives the observation scores for each of the sound features and the frame information including the durations and the locations of the frames, which are associated with the sound features, respectively. In addition, the maximum keyword score determination unit 1360 receives the state information including transition scores (as described above in connection with **FIG. 5**) and the duration information including the predetermined ranges of durations. In one embodiment, the transition scores include a transition score from the non-keyword state to a single entry state. Alternatively, the transition scores may include a transition score from the non-keyword state to each of multiple entry states.

The duration information further includes, for each of the states, a duration score determined for each of the durations. The predetermined duration scores for each state may be set in association with probability values that the state falls in the durations, respectively. By calculations using the received observation scores, the transition scores, and the duration scores based on the frame information and the predetermined ranges of durations, the maximum keyword score determination unit 1360 determines keyword scores for the possible state sequences. Among the determined keyword scores, the maximum keyword score determination unit 1360 determines the greatest keyword score for use in detecting the target keyword.

The maximum keyword score determination unit 1360 may determine the keyword scores according to a duration-restricted semi-Markov model scheme. For example, if one of the possible state sequences includes a state whose duration is not within a predetermined range of durations for the state, the maximum keyword score determination unit 1360 may not determine a keyword score for the state sequence while determining keyword scores for other state sequences not including such a state. In this example, the maximum keyword score determination unit 1360 may select the greatest keyword score among the determined keyword scores by using any suitable method such as a Viterbi algorithm, as follows.

$$V(t,s) = \max_{(dmin(s) \le d \le dmax(s),\, s')} \Big( V(t-d,s') + T(s',s) + O(t,d,s) + D(d,s) \Big)$$

(Equation 1)

where $t$ indicates a frame size of a current input sound, s represents a current state, $V(t,s)$ indicates the greatest keyword score for all possible state sequences having the state $s$ as a last state that starts from one of the time frames 1 to $t$, $d$ represents the duration of the state $s$, $dmin(s)$ represents the smallest duration of the state $s$ among a predetermined range of durations for the state $s$, $dmax(s)$ represents the greatest duration of the state $s$ among the predetermined range of durations for the state $s$, $s'$ represents the previous state of the state $s$, $T(s,s)$ indicates a transition score from the previous state $s'$ to the current state $s$, $O(t,d,s)$ represents observation scores for the time frames from frame $t-d+1$ to frame $t$ for the state $s$, and $D(d,s)$ indicates a duration score for s when a duration of the state $s$ is $d$.

As shown in Equation 1 under the SMM scheme, the greatest keyword score for the target keyword is calculated based on the restricted range of durations for each state. By using such restricted ranges of durations, the maximum keyword score determination unit 1360 may be implemented with relatively low computational complexity. Further, since the restricted ranges of durations are predetermined taking into consideration different speaking speeds of users, the keyword detection performance is not degraded substantially.

After determining the greatest keyword score, the maximum keyword score determination unit 1360 provides the greatest keyword score to the keyword detection unit 1340. Upon receiving the greatest keyword score from the maximum keyword score determination unit 1360, the keyword detection unit 1340 detects the target keyword in the input sound based on the greatest keyword score. For example, the keyword detection unit 1340 may use a threshold score for detecting the target keyword from the storage unit 230, as described above with reference to **FIG. 5**. Upon detecting the target keyword, the keyword detection unit 1340 generates and provides an activation signal ("ON signal") to turn on a function or an application, which is associated with the target keyword.

In one embodiment, for determining the range of durations for each of the states, the score determination unit 1330 may receive a plurality of reference input sounds for the target keyword. For each of the reference input sounds, the score determination unit 1330 determines a reference state sequence and, by backtracking the reference state sequence, also determines durations associated with each of the states in the reference state sequence in a similar manner as described above in connection with **FIGS. 11** and **12**. As such, the score determination unit 1330 may determine the range of durations for each state based on the determined durations for the state from the reference state sequences (e.g., by averaging the determined durations). The ranges of durations thus determined may then be stored in the storage unit 230.

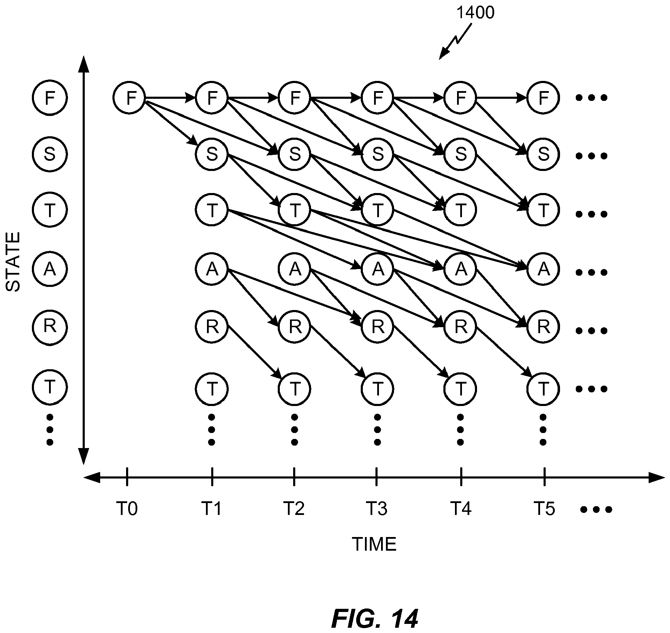

**FIG. 14** shows a block diagram 1400 of a plurality of state sequences for a target keyword under the Markov chain model that are generated based on a range of durations for each of a plurality of states "S," "T," "A," "R," "T," etc. associated with the target keyword according to one embodiment. The range of durations for each of the states may be predetermined to be restricted in the manner as described above with respect to **FIG.** 13. For ease of explanation, it may be assumed that a period between a point in time (e.g., "T1") and the next point in time (e.g., "T2") in the diagram 1400 is 10 ms and a segmented sound feature has a duration of $10 \times N$ ms where N is a positive integer and the duration of the segmented sound feature is not greater than the time period of an input sound.

In the illustrated embodiment, traverse times of transition lines from a previous state to a current state may indicate the durations in the predetermined range for each of the states. For example, in case of a state "A" at times T4 and T5, transition lines from a previous state "T" at time T2 to the current state "A" at times T4 and T5 are traversed in 20 ms and 30 ms, respectively. In this case, the predetermined range of durations of the state "A" is from 20 ms to 30 ms in the state sequences. Accordingly, for the state "A," an observation score may be determined and a duration score can be predetermined for only segmented features of 20 ms or 30 ms. The observation score and the predetermined duration score may then be used to determine keyword scores and then the greatest keyword score among them to detect the target keyword. As such, since the keyword scores for use in detecting the target keyword are calculated based on the restricted ranges of durations, a computational time for detecting the target keyword may be significantly reduced under the SMM scheme.

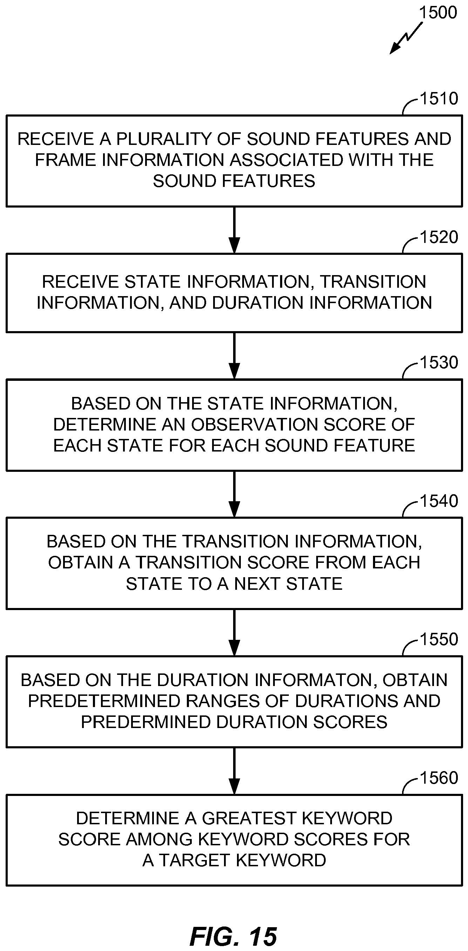

**FIG. 15** is a flowchart of a method 1500, performed by the score determination unit 1330, for detecting a target keyword in an input sound based on a predetermined range of durations under the SMM according to one embodiment. Initially, the score determination unit 1330 receives sound features extracted from variable time frames and frame information on a duration and a location of each frame, at 1510. The score determination unit 1330 receives state information on a plurality of states and a probability model for each state, transition information from each of the states to a next state in a plurality of state sequences that are possible for the target keyword, and duration information on a predetermined range of durations and a duration score determined for each of the durations, at 1520.

For each of the sound features, the score determination unit 1330 determines an observation score of each of the states based on the probability model of each state, at 1530. Based on the transition information, the score determination unit 1330 obtains a transition score from each of the states to a next state in the possible state sequences, at 1540. At 1550, the score determination unit 1330 obtains the predetermined range of durations and the duration score determined for each of the durations from the duration information. By calculations using the received observation scores, the transition scores, and the duration scores based on the frame information and the predetermined range of durations, the score determination unit 1330 determines keyword scores for the possible state sequences and selects the greatest keyword score among the determined keyword scores, at 1560.

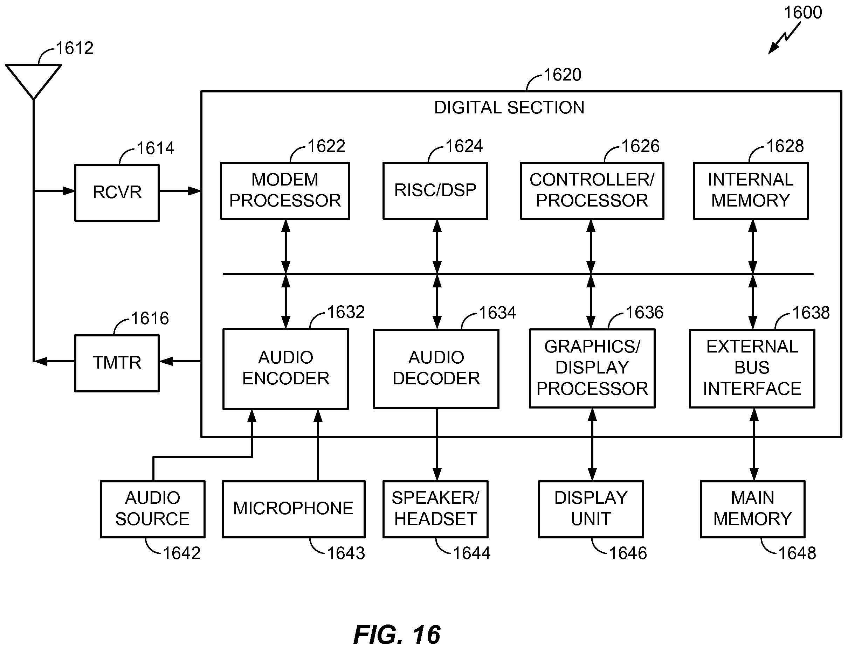

**FIG. 16** illustrates a block diagram of a mobile device 1600 in a wireless communication system in which the methods and apparatus of the present disclosure for detecting a target keyword from an input sound to activate a function may be implemented according to some embodiments. The mobile device 1600 may be a cellular phone, a terminal, a handset, a personal digital assistant (PDA), a wireless modem, a cordless phone, a tablet, and so on. The wireless communication system may be a Code Division Multiple Access (CDMA) system, a Global System for Mobile Communications (GSM) system, a Wideband CDMA (W-CDMA) system, a Long Term Evolution (LTE) system, a LTE Advanced system, and so on.

The mobile device 1600 may be capable of providing bidirectional communication via a receive path and a transmit path. On the receive path, signals transmitted by base stations are received by an antenna 1612 and are provided to a receiver (RCVR) 1614. The receiver 1614 conditions and digitizes the received signal and provides the conditioned and digitized signal to a digital section 1620 for further processing. On the transmit path, a transmitter (TMTR) receives data to be transmitted from a digital section 1620, processes and conditions the data, and generates a modulated signal, which is transmitted via the antenna 1612 to the base stations. The receiver 1614 and the transmitter 1616 is part of a transceiver that supports CDMA, GSM, W-CDMA, LTE, LTE Advanced, and so on.

The digital section 1620 includes various processing, interface, and memory units such as, for example, a modem processor 1622, a reduced instruction set computer/ digital signal processor (RISC/DSP) 1624, a controller/processor 1626, an internal memory 1628, a generalized audio encoder 1632, a generalized audio decoder 1634, a graphics/display processor 1636, and/or an external bus interface (EBI) 1638. The modem processor 1622 performs processing for data transmission and reception, e.g., encoding, modulation, demodulation, and decoding. The RISC/DSP 1624 performs general and specialized processing for the mobile device 1600. The controller/processor 1626 controls the operation of various processing and interface units within the digital section 1620. The internal memory 1628 stores data and/or instructions for various units within the digital section 1620.

The generalized audio encoder 1632 performs encoding for input signals from an audio source 1642, a microphone 1643, and so on. The generalized audio decoder 1634 performs decoding for coded audio data and provides output signals to a speaker/headset 1644. It should be noted that the generalized audio encoder 1632 and the generalized audio decoder 1634 are not necessarily required for interface with the audio source, the microphone 1643 and the speaker/headset 1644, and thus are not shown in the mobile device 1600. The graphics/display processor 1636 performs processing for graphics, videos, images, and texts, which is presented to a display unit 1646. The EBI 1638 facilitates transfer of data between the digital section 1620 and a main memory 1648.

The digital section 1620 is implemented with one or more processors, DSPs, microprocessors, RISCs, etc. The digital section 1620 is also fabricated on one or more application specific integrated circuits (ASICs) and/or some other type of integrated circuits (ICs).

In general, any device described herein is indicative of various types of devices, such as a wireless phone, a cellular phone, a laptop computer, a wireless multimedia device, a wireless communication personal computer (PC) card, a PDA, an external or internal modem, a device that communicates through a wireless channel, and so on. A device may have various names, such as access terminal (AT), access unit, subscriber unit, mobile station, client device, mobile unit, mobile phone, mobile, remote station, remote terminal, remote unit, user device, user equipment, handheld device, etc. Any device described herein may have a memory for storing instructions and data, as well as hardware, software, firmware, or combinations thereof.

**Claims**

1. A method for detecting a target keyword, the target keyword including an initial portion and a plurality of subsequent portions, the method comprising:

   generating, at an electronic device, an input sound stream based on an input sound that starts from one of the plurality of subsequent portions of the target keyword, the input sound stream generated during time periods according to a duty cycle;
   determining (620) sound features associated with the input sound based on the input sound stream;
   obtaining (630) data descriptive of a state network, wherein the state network includes a starting state, multiple entry states, and transitions from the starting state to each of the multiple entry states; and
   determining (640) whether the input sound corresponds to the target keyword based on the sound features and further based on the data.

2. The method of claim 1, further comprising, in response to determining that the input sound corresponds to the target keyword:

   activating (650) a voice assistant of the electronic device;
   using the voice assistant, generating a message at the electronic device; and
   receiving user input indicating activation of one or more functions of the electronic device.

3. The method of claim 1, wherein data corresponding to the multiple entry states is stored in the electronic device by:

   receiving reference input sounds corresponding to the initial portion and the plurality of subsequent portions of the target keyword;

determining (1220) a plurality of reference state sequences for the reference input sounds;
determining state time periods for a plurality of states in the plurality of reference state sequences; and
determining the multiple entry states;
wherein the state time periods for the plurality of states in the plurality of reference state sequences are preferably determined by backtracking the plurality of reference state sequences.

4. The method of claim 1, wherein determining whether the input sound corresponds to the target keyword comprises determining multiple keyword scores, and wherein each keyword score corresponds to a respective state sequence including a transition from the starting state to one of the multiple entry states.

5. The method of claim 4, wherein the state network includes multiple state sequences, each state sequence comprising states including the starting state, one of the multiple entry states, and one or more subsequent states, wherein each state sequence of the multiple state sequences is preferably associated with a hidden Markov model and transition information for the multiple states of the state sequence.

6. The method of claim 5, wherein determining the multiple keyword scores comprises:

determining (1010) an observation score of each of the states for each of the sound features based on the state network; and
obtaining (1020) a transition score from each of the states to a next state in each of the multiple state sequences based on transition information of the state network, and
wherein the multiple keyword scores are determined based on the observation scores and the transition scores.

7. The method of claim 4, wherein a greatest keyword score among the multiple keyword scores is used to determine whether the input sound corresponds to the target keyword , wherein the input sound is preferably determined to correspond to the target keyword if the greatest keyword score is greater than a threshold score.

8. The method of claim 4, wherein the state network includes a non-keyword state sequence, and wherein determining the multiple keyword scores comprises determining a non-keyword score for the non-keyword state sequence;
wherein determining whether the input sound corresponds to the target keyword preferably further comprises selecting a greatest keyword score among the multiple keyword scores, and determining whether the input sound corresponds to the target keyword based on a difference between the greatest keyword score and the non-keyword score;
wherein determining whether the input sound corresponds to the target keyword based on the difference preferably comprises:

determining a confidence value based on the difference; and
determining that the input sound corresponds to the target keyword if the confidence value is greater than a threshold confidence value.

9. An electronic device for detecting a target keyword including an initial portion and a plurality of subsequent portions, the electronic device comprising:

a sound sensor configured to generate an input sound stream based on an input sound that starts from one of the plurality of subsequent portions of the target keyword, the sound sensor further configured to generate the input sound stream during time periods according to a duty cycle; and
a voice activation unit configured to determine sound features associated with the input sound based on the input sound stream, to obtain data descriptive of a state network, and to determine whether the input sound corresponds to the target keyword based on the sound features and the data,
wherein the state network includes a starting state, multiple entry states, and transitions from the starting state to each of the multiple entry states.

10. The method of claim 1, further comprising:

based on the duty cycle, providing an activation signal to activate a sound sensor of the electronic device; and
based on the duty cycle, providing a deactivation signal to deactivate the sound sensor of the electronic device.

11. The method of claim 10, further comprising, in response to determining that the input sound corresponds to the target keyword, providing an activation signal to activate a voice assistant of the electronic device.

12. The method of claim 10, wherein the time periods correspond to an activation time interval associated with the duty cycle, wherein the activation signal is provided during the activation time interval, and wherein the deactivation signal is provided during a deactivation time interval associated with the duty cycle, wherein the initial portion is preferably spoken during the deactivation time interval, and wherein the one of the plurality of subsequent portions is spoken during the activation time interval.

13. The method of claim 1, wherein the duty cycle is associated with a duty cycle function of the electronic device, and further comprising, in response to determining that the initial portion does not include speech, providing an activation signal to activate the duty cycle function.

14. The method of claim 1, wherein the time periods comprise one or more active time intervals, wherein the plurality of subsequent portions of the target keyword are spoken by a user during the one or more active time intervals.

15. The electronic device of claim 9, wherein the sound sensor includes a microphone configured to record the input sound to generate the input sound stream, during the time periods, and wherein the sound sensor further includes a sound detector coupled to the microphone and configured to determine whether a portion of the input sound stream satisfies a sound intensity threshold, the electronic device preferably further comprising a speech detector coupled to the sound detector and to the voice activation unit.

**Patentansprüche**

1. Verfahren zum Erkennen eines Zielschlüsselworts, wobei das Zielschlüsselwort einen anfänglichen Teil und mehrere aufeinanderfolgende Teile enthält, wobei das Verfahren Folgendes umfasst:

   Erzeugen an einem elektronischen Gerät eines Eingangstonflusses auf der Grundlage eines Eingangstons, der mit einem der mehreren aufeinanderfolgenden Teile des Zielschlüsselworts beginnt, wobei der Eingangstonfluss während Zeitabschnitten gemäß einem Arbeitszyklus erzeugt wird;
   Bestimmen (620) von mit dem Eingangston verknüpften Tonmerkmalen auf der Grundlage des Eingangstonflusses;
   Gewinnen (630) von ein Zustandsnetzwerk beschreibenden Daten, wobei das Zustandsnetzwerk einen Startzustand, mehrere Eintrittszustände und Übergänge von dem Startzustand zu jedem der mehreren Eintrittszustände enthält; und
   Bestimmen (640) auf der Grundlage der Tonmerkmale und ferner auf der Grundlage der Daten, ob der Eingangston dem Zielschlüsselwort entspricht.

2. Verfahren nach Anspruch 1, ferner als Reaktion auf das Bestimmen, dass der Eingangston dem Zielschlüsselwort entspricht, Folgendes umfassend:

   Aktivieren (650) eines Sprachassistenten des elektronischen Geräts;
   Erzeugen einer Nachricht auf dem elektronischen Gerät unter Verwendung des Sprachassistenten; und
   Empfangen einer Benutzereingabe, die ein Aktivieren einer oder mehrerer Funktionen des elektronischen Geräts anzeigt.

3. Verfahren nach Anspruch 1, wobei Daten, die den mehreren Eintrittszuständen entsprechen, auf dem elektronischen Gerät gespeichert sind, durch:

   Empfangen von Referenzeingangstönen, die dem anfänglichen Teil und den mehreren aufeinanderfolgenden Teilen des Zielschlüsselworts entsprechen;
   Bestimmen (1220) einer Vielzahl von Referenzzustandssequenzen für die Referenzeingangstöne;
   Bestimmen von Zustandszeitabschnitten für eine Vielzahl von Zuständen in der Vielzahl von Referenzzustandssequenzen; und
   Bestimmen der mehreren Eintrittszustände;
   wobei die Zustandszeitabschnitte für die Vielzahl von Zuständen in der Vielzahl von Referenzzustandssequenzen vorzugsweise durch Rücksetzen der Vielzahl von Referenzzustandssequenzen bestimmt werden.

**4.** Verfahren nach Anspruch 1, wobei das Bestimmen, ob der Eingangston dem Zielschlüsselwort entspricht, das Bestimmen mehrerer Schlüsselwortpunktzahlen umfasst und wobei jede Schlüsselwortpunktzahl einer entsprechenden Zustandssequenz, die einen Übergang von dem Startzustand zu einem der mehreren Eintrittszustände enthält, entspricht.

**5.** Verfahren nach Anspruch 4, wobei das Zustandsnetzwerk mehrere Zustandssequenzen enthält, wobei jede Zustandssequenz Zustände umfasst, die den Startzustand, einen der mehreren Eintrittszustände und einen oder mehrere aufeinanderfolgende Zustände enthalten, wobei jede Zustandssequenz der mehreren Zustandssequenzen vorzugsweise mit einem Hidden-Markov-Modell und Übergangsinformationen für die mehreren Zustände der Zustandssequenz verknüpft ist.

**6.** Verfahren nach Anspruch 5, wobei das Bestimmen der mehreren Schlüsselwortpunktzahlen Folgendes umfasst:

Bestimmen (1010) einer Beobachtungspunkzahl jedes der Zustände für jedes der Tonmerkmale auf der Grundlage des Zustandsnetzwerks; und
Gewinnen (1020) einer Übergangspunktzahl von jedem der Zustände in einen nächsten Zustand in jeder der mehreren Zustandssequenzen auf der Grundlage von Übergangsinformationen des Zustandsnetzwerks, und wobei die mehreren Schlüsselwortpunktzahlen auf der Grundlage der Beobachtungspunktzahlen und der Übergangspunktzahlen bestimmt werden.

**7.** Verfahren nach Anspruch 4, wobei eine höchste Schlüsselwortpunktzahl unter den mehreren Schlüsselwortpunktzahlen verwendet wird, um zu bestimmen, ob der Eingangston dem Zielschlüsselwort entspricht, wobei der Eingangston vorzugsweise bestimmt wird, um dem Zielschlüsselwort zu entsprechen, falls die höchste Schlüsselwortpunktzahl höher ist als eine Schwellenwertpunktzahl.

**8.** Verfahren nach Anspruch 4, wobei das Zustandsnetzwerk eine Nicht-Schlüsselwortzustandssequenz enthält und wobei das Bestimmen der mehreren Schlüsselwortpunktzahlen das Bestimmen einer Nicht-Schlüsselwortpunktzahl für die Nicht-Schlüsselwortzustandssequenz umfasst;
wobei das Bestimmen, ob der Eingangston dem Zielschlüsselwort entspricht, vorzugsweise ferner Folgendes umfasst: das Auswählen einer höchsten Schlüsselwortpunktzahl unter den mehreren Schlüsselwortpunktzahlen und das Bestimmen, ob der Eingangston dem Zielschlüsselwort auf der Grundlage einer Differenz zwischen der höchsten Schlüsselwortpunktzahl und der Nicht-Schlüsselwortpunktzahl entspricht;
wobei das Bestimmen, ob der Eingangston dem Zielschlüsselwort auf der Grundlage der Differenz entspricht, vorzugsweise Folgendes umfasst:

Bestimmen eines Vertrauenswerts auf der Grundlage der Differenz; und
Bestimmen, dass der Eingangston dem Zielschlüsselwort entspricht, falls der Vertrauenswert höher als ein Schwellenwertvertrauenswert ist.

**9.** Elektronisches Gerät zum Bestimmen eines Zielschlüsselworts, das einen anfänglichen Teil und eine Vielzahl von aufeinanderfolgenden Teilen enthält, wobei das elektronische Gerät Folgendes umfasst:

einen Tonsensor, der dafür ausgelegt ist, einen Eingangstonfluss auf der Grundlage eines Eingangstons zu erzeugen, der mit einem der Vielzahl von aufeinanderfolgenden Teilen des Zielschlüsselworts beginnt, wobei der Tonsensor ferner dafür ausgelegt ist, den Eingangstonfluss während Zeitabschnitten gemäß einem Arbeitszyklus zu erzeugen; und
eine Sprachaktivierungseinheit, die dafür ausgelegt ist, mit dem Eingangston verknüpfte Tonmerkmale auf der Grundlage des Eingangstonflusses zu bestimmen, um ein Zustandsnetzwerk beschreibende Daten zu gewinnen und zu bestimmen, ob der Eingangston dem Zielschlüsselwort auf der Grundlage der Tonmerkmale und der Daten entspricht,
wobei das Zustandsnetzwerk einen Startzustand, mehrere Eintrittszustände und Übergänge von dem Startzustand in jeden der mehreren Eintrittszustände enthält.

**10.** Verfahren nach Anspruch 1, ferner Folgendes umfassend:

auf der Grundlage des Arbeitszyklus Bereitstellen eines Aktivierungssignals zum Aktivieren eines Tonsensors des elektronischen Geräts; und
auf der Grundlage des Arbeitszyklus Bereitstellen eines Deaktivierungssignals zum Deaktivieren des Tonsensors des elektronischen Geräts.

**11.** Verfahren nach Anspruch 10, ferner als Reaktion auf das Bestimmen, dass der Eingangston dem Zielschlüsselwort entspricht, das Bereitstellen eines Aktivierungssignals zum Aktivieren eines Sprachassistenten des elektronischen Geräts umfassend.

**12.** Verfahren nach Anspruch 10, wobei die Zeitabschnitte einem Aktivierungszeitintervall, das mit dem Arbeitszyklus verknüpft ist, entsprechen, wobei das Aktivierungssignal während des Aktivierungszeitintervalls bereitgestellt wird und wobei das Deaktivierungssignal während eines Deaktivierungszeitintervalls, das mit dem Arbeitszyklus verknüpft ist, bereitgestellt wird, wobei der anfängliche Teil vorzugsweise während des Deaktivierungszeitintervalls gesprochen wird und wobei der eine der Vielzahl von aufeinanderfolgenden Teilen während des Aktivierungszeitintervalls gesprochen wird.

**13.** Verfahren nach Anspruch 1, wobei der Arbeitszyklus mit einer Arbeitszyklusfunktion des elektronischen Geräts verknüpft ist und als Reaktion auf das Bestimmen, dass der anfängliche Teil kein Sprechen enthält, ferner Folgendes umfasst: das Bereitstellen eines Aktivierungssignals zum Aktivieren der Arbeitszyklusfunktion.

**14.** Verfahren nach Anspruch 1, wobei die Zeitabschnitte ein oder mehrere aktive Zeitintervalle umfassen, wobei die Vielzahl von aufeinanderfolgenden Teilen des Zielschlüsselworts während des einen oder der mehreren aktiven Zeitintervalle von einem Benutzer gesprochen werden.

**15.** Elektronisches Gerät nach Anspruch 9, wobei der Tonsensor ein Mikrophon enthält, das dafür ausgelegt ist, den Eingangston aufzunehmen, um den Eingangstonfluss während der Zeitabschnitte zu erzeugen, und wobei der Tonsensor ferner einen Tondetektor enthält, der mit dem Mikrophon gekoppelt ist und dafür ausgelegt ist zu bestimmen, ob ein Teil des Eingangstonflusses einen Tonintensitätsschwellenwert erfüllt, wobei das elektronische Gerät vorzugsweise ferner einen Sprachdetektor, der mit dem Tondetektor und mit der Sprachaktivierungseinheit gekoppelt ist, umfasst.

**Revendications**

**1.** Procédé de détection d'un mot clé cible, le mot clé cible comportant une portion initiale et une pluralité de portions ultérieures, le procédé comprenant :

la génération, dans un dispositif électronique, d'un flux de sons d'entrée d'après un son d'entrée qui démarre à partir de l'une de la pluralité de portions ultérieures du mot clé cible, le flux de sons d'entrée étant généré pendant des périodes selon un cycle de service ;
la détermination (620) de particularités de son associées au son d'entrée d'après le flux de sons d'entrée ;
l'obtention (630) de données descriptives d'un réseau d'états, dans lequel le réseau d'états comporte un état de démarrage, des états d'entrée multiples et des transitions de l'état de démarrage à chacun des états d'entrée multiples ; et
la détermination (640) pour savoir si le son d'entrée correspond au mot clé cible d'après les particularités de son et d'après en outre les données.

**2.** Procédé selon la revendication 1, comprenant en outre, en réponse à la détermination que le son d'entrée correspond au mot clé cible :

l'activation (650) d'un assistant vocal du dispositif électronique ;
à l'aide de l'assistant vocal, la génération d'un message dans le dispositif électronique ; et
la réception d'une entrée utilisateur indiquant une activation d'une ou de plusieurs fonctions du dispositif électronique.

**3.** Procédé selon la revendication 1, dans lequel des données correspondant aux états d'entrée multiples sont stockées dans le dispositif électronique par :

la réception de sons d'entrée de référence correspondant à la portion initiale et à la pluralité de portions ultérieures du mot clé cible ;
la détermination (1220) d'une pluralité de séquences d'états de référence pour les sons d'entrée de référence ;

la détermination de périodes d'état pour une pluralité d'états dans la pluralité de séquences d'états de référence ; et

la détermination des états d'entrée multiples ;

dans lequel les périodes d'état pour la pluralité d'états dans la pluralité de séquences d'états de référence sont de préférence déterminées par retour en arrière de la pluralité de séquences d'états de référence.

4. Procédé selon la revendication 1, dans lequel la détermination pour savoir si le son d'entrée correspond au mot clé cible comprend la détermination de résultats de mot clé multiples, et dans lequel chaque résultat de mot clé correspond à une séquence d'états respective comportant une transition depuis l'état de démarrage jusqu'à l'un des états d'entrée multiples.

5. Procédé selon la revendication 4, dans lequel le réseau d'états comporte des séquences d'états multiples, chaque séquence d'états comprenant des états comportant l'état de démarrage, l'un des états d'entrée multiples et un ou plusieurs états ultérieurs, dans lequel chaque séquence d'états des séquences d'états multiples est de préférence associée à un modèle de Markov caché et à des informations de transition pour les états multiples pour la séquence d'états.

6. Procédé selon la revendication 5, dans lequel la détermination des résultats de mot clé multiples comprend :

la détermination (1010) d'un résultat d'observation de chacun des états pour chacune des particularités de son d'après le réseau d'états ; et

l'obtention (1020) d'un résultat de transition de chacun des états à un état suivant dans chacune des séquences d'états multiples d'après des informations de transition du réseau d'états, et

dans lequel les résultats de mot clé multiples sont déterminés d'après les résultats d'observation et les résultats de transition.

7. Procédé selon la revendication 4, dans lequel un résultat de mot clé le plus élevé parmi les résultats de mot clé multiples est utilisé pour déterminer si le son d'entrée correspond au mot clé cible, dans lequel le son d'entrée est de préférence déterminé pour correspondre au mot clé cible si le résultat de mot clé le plus élevé est plus élevé qu'un résultat seuil.

8. Procédé selon la revendication 4, dans lequel le réseau d'états comporte une séquence d'états de non-mot clé, et dans lequel la détermination des résultats de mot clé multiples comprend la détermination d'un résultat de non-mot clé pour la séquence d'états de non-mot clé ;

dans lequel la détermination pour savoir si le son d'entrée correspond au mot clé cible comprend en outre de préférence la sélection d'un résultat de mot clé le plus élevé parmi les résultats de mot clé multiples, et la détermination pour savoir si le son d'entrée correspond au mot clé cible d'après une différence entre le résultat de mot clé le plus élevé et le résultat de non-mot clé ;

dans lequel la détermination pour savoir si le son d'entrée correspond au mot clé cible d'après la différence comprend de préférence :

la détermination d'une valeur de confiance d'après la différence ; et

la détermination que le son d'entrée correspond au mot clé cible si la valeur de confiance est plus élevée qu'une valeur de confiance seuil.

9. Dispositif électronique pour détecter un mot clé cible comportant une portion initiale et une pluralité de portions ultérieures, le dispositif électronique comprenant :

un capteur de son configuré pour générer un flux de sons d'entrée d'après un son d'entrée qui démarre à partir de l'une de la pluralité de portions ultérieures du mot clé cible, le capteur de son étant en outre configuré pour générer le flux de sons d'entrée pendant des périodes selon un cycle de service ; et

une unité d'activation vocale configurée pour déterminer des particularités de son associées au son d'entrée d'après le flux de sons d'entrée pour obtenir des données descriptives d'un réseau d'états, et pour déterminer si le son d'entrée correspond au mot clé cible d'après les particularités de son et les données, dans lequel le réseau d'états comporte un état de démarrage, des états d'entrée multiples et des transitions de l'état de démarrage à chacun des états d'entrée multiples.

10. Procédé selon la revendication 1, comprenant en outre

d'après le cycle de service, la fourniture d'un signal d'activation pour activer un capteur de son du dispositif électronique ; et

d'après le cycle de service, la fourniture d'un signal de désactivation pour désactiver le capteur de son du dispositif électronique.

11. Procédé selon la revendication 10, comprenant en outre, en réponse à la détermination que le son d'entrée correspond au mot clé cible, la fourniture d'un signal d'activation pour activer un assistant vocal du dispositif électronique.

12. Procédé selon la revendication 10, dans lequel les périodes correspondent à un intervalle d'activation associé au cycle de service, dans lequel le signal d'activation est fourni pendant l'intervalle d'activation, et dans lequel le signal de désactivation est fourni pendant un intervalle de désactivation associé au cycle de service, et dans lequel la portion initiale est de préférence parlée pendant l'intervalle de désactivation, et dans lequel l'une de la pluralité de portions ultérieures est parlée pendant l'intervalle d'activation.

13. Procédé selon la revendication 1, dans lequel le cycle de service est associé à une fonction de cycle de service du dispositif électronique, et comprenant en outre, en réponse à la détermination que la portion initiale ne comporte pas de parole, la fourniture d'un signal d'activation pour activer la fonction de cycle de service.

14. Procédé selon la revendication 1, dans lequel les périodes comprennent un ou plusieurs intervalles actifs, dans lequel la pluralité de portions ultérieures du mot clé cible sont parlées par un utilisateur pendant les un ou plusieurs intervalles actifs.

15. Dispositif électronique selon la revendication 9, dans lequel le capteur de son comporte un microphone configuré pour enregistrer le son d'entrée afin de générer le flux de sons d'entrée, pendant les périodes, et dans lequel le capteur de son comporte en outre un détecteur de son couplé au microphone et configuré pour déterminer si une portion du flux de sons d'entrée satisfait un seuil d'intensité de son, le dispositif électronique comprenant en outre de préférence un détecteur de parole couplé au détecteur de son et à l'unité d'activation vocale.

**FIG. 1**

**FIG. 2**

INPUT
SOUND → MICROPHONE 310 → SOUND DETECTOR 320 → SPEECH DETECTOR 254 → TO VOICE ACTIVATION UNIT 256

210

**FIG. 3**

**FIG. 4**

**FIG. 5**

600

610

RECEIVE AN INPUT SOUND
STARTING FROM ONE OF A PLURALITY OF
PORTIONS OF A TARGET KEYWORD

620

EXTRACT A PLURALITY OF SOUND FEATURES
FROM THE INPUT SOUND

630

OBTAIN STATE INFORMATION ON A PLURALITY
OF STATES ASSOCIATED WITH THE PORTIONS OF
THE TARGET KEYWORD

640

DETECT THE INPUT SOUND AS THE TARGET
KEYWORD BASED ON THE SOUND FEATURES
AND THE STATE INFORMATION

650

ACTIVATE A VOICE ASSISTANT UNIT ASSOCIATED
WITH THE TARGET KEYWORD

*FIG. 6*

FIG. 7

FIG. 8

**FIG. 9**

640

1010

FOR EACH SOUND FEATURE, DETERMINE AN OBSERVATION SCORE FOR EACH OF THE STATES ASSOCIATED WITH THE TARGET KEYWORD

1020

OBTAIN A PREDETERMINED NUMBER OF ENTRY STATES AND TRANSITION SCORES FOR THE STATES

1030

DETERMINE KEYWORD SCORES FOR STATE SEQUENCES BASED ON THE OBSERVATION SCORES AND THE TRANSITION SCORES

1040

DETECT THE TARGET KEYWORD IN THE RECEIVED INPUT SOUND BASED ON THE GREATEST KEYWORD SCORE AMONG THE KEYWORD SCORES

*FIG. 10*

BACKTRACKING

FIG. 11

1200

┌─────────────────────────────────────────┐ ┌1210
│                                          │
│      OBTAIN A REFERENCE INPUT SOUND      │
│         FOR A TARGET KEYWORD             │
│                                          │
└─────────────────────────────────────────┘
                    │
                    ▼
┌─────────────────────────────────────────┐ ┌1220
│                                          │
│   DETERMINE A REFERENCE STATE SEQUENCE   │
│      FOR THE REFERENCE INPUT SOUND       │
│                                          │
└─────────────────────────────────────────┘
                    │
                    ▼
┌─────────────────────────────────────────┐ ┌1230
│                                          │
│    DETERMINE STATES IN THE REFERENCE     │
│   STATE SEQUENCE BY BACKTRACKING         │
│      THE REFERENCE STATE SEQUENCE        │
│                                          │
└─────────────────────────────────────────┘
                    │
                    ▼
┌─────────────────────────────────────────┐ ┌1240
│                                          │
│  DETERMINE THE NUMBER OF ENTRY STATES    │
│    BASED ON THE DETERMINED STATES        │
│                                          │
└─────────────────────────────────────────┘

*FIG. 12*

FIG. 13

FIG. 14

1500

1510

RECEIVE A PLURALITY OF SOUND FEATURES AND
FRAME INFORMATION ASSOCIATED WITH THE
SOUND FEATURES

1520

RECEIVE STATE INFORMATION, TRANSITION
INFORMATION, AND DURATION INFORMATION

1530

BASED ON THE STATE INFORMATION,
DETERMINE AN OBSERVATION SCORE OF
EACH STATE FOR EACH SOUND FEATURE

1540

BASED ON THE TRANSITION INFORMATION,
OBTAIN A TRANSITION SCORE FROM EACH
STATE TO A NEXT STATE

1550

BASED ON THE DURATION INFORMATON, OBTAIN
PREDETERMINED RANGES OF DURATIONS AND
PREDERMINED DURATION SCORES

1560

DETERMINE A GREATEST KEYWORD
SCORE AMONG KEYWORD SCORES FOR
A TARGET KEYWORD

*FIG. 15*

**FIG. 16**

EP 2 994 910 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61820498 A
- US 61859058 A
- US 08793913 A